# EUROPEAN PATENT SPECIFICATION

(11) **EP 3 585 591 B1**
(45) Date of publication and mention of the grant of the patent: **02.04.2025**
(21) Application number: 18710152.2
(22) Date of filing: 23.02.2018
(51) Int. Cl.: B29C 64/129, B29C 64/35, B08B 3/04, B29C 71/00, B33Y 10/00, B33Y 30/00, B33Y 40/00, B33Y 40/20, B29L 31/00

(54) **METHOD AND CONTAINER FOR REMOVING RESIN RESIDUES FROM A MODEL CREATED BY THREE-DIMENSIONAL 3D PRINTING**
VERFAHREN UND BEHÄLTER ZUR ENTFERNUNG VON HARZRÜCKSTÄNDEN AUS EINEM DURCH DREIDIMENSIONALES 3D-DRUCKEN ERZEUGTEN MODELL
PROCÉDÉ ET RÉCIPIENT POUR ÉLIMINER DES RÉSIDUS DE RÉSINE D'UN MODÈLE CRÉÉ PAR IMPRESSION 3D TRIDIMENSIONNELLE

(30) Priority: 23.02.2017 IT 201700020797
(43) Date of publication of application: 01.01.2020
(73) Proprietor: RD Printing S.r.l., 36016 Thiene (VI) (IT)
(72) Inventor: COSTABEBER, Ettore Maurizio, I-36010 Zanè (VI) (IT)
(74) Representative: Studio Torta S.p.A.
(86) International application number: PCT/IB2018/051138
(87) International publication number: WO 2018/154500

(56) References cited:
- EP-A1- 3 040 046
- WO-A2-2004/043680
- JP-A- H0 760 844
- US-A1- 2016 059 270
- CHRISTIAN_CAD: "Home brew vibration cleaner leaves your SLA prints squeaky clean", 1 February 2015 (2015-02-01), Retrieved from the Internet <URL:https://www.hubs.com/talk/t/home-brew-vibration-cleaner-leaves-your-sla-prints-squeaky-clean/624> [retrieved on 20240522]

## Description

The present invention relates to a container and to a method for removing resin residues from a model created by three-dimensional printing.

In the present description and in the following claims, the terms "three-dimensional 3D printing" and "three-dimensional 3D printer" refer to the technology that creates three-dimensional objects by means of a plurality of superposed layers, in which each layer is obtained by selective solidification of a fluid substance in the areas corresponding to the volume of the object to be produced.

In particular, in the present description and in the following claims, three-dimensional 3D printing can be a stereolithography, for example a laser scanning stereolithography or of a commercially known technology like DLP^{®} (Digital Light Processing), or a "multijet modelling" such as commercially known technologies like "Stratasys Objet" and "3D Systems multijet", or a technology used by the company Solidscape.

Such three-dimensional objects shall also be indicated, in the present description and in the following claims, as "three-dimensional models" or even simply as "models". In particular, reference is made to the non-limiting case in which the three-dimensional objects are teeth, parts of teeth, elements of dental prostheses or the like.

A known three-dimensional 3D printer comprises a container in which is placed the fluid substance, generally a photosensitive resin in the liquid or paste state.

The machine further comprises a source, generally of the luminous type, which emits a radiation adapted to solidify the fluid substance (reference is also made to polymerisation of the photosensitive resin).

An optical unit conveys the aforesaid radiation towards a reference surface arranged inside the container, which corresponds to the position of the layer of the object to be solidified.

The three-dimensional object being formed is supported by a modelling base or plate, which is movable vertically with respect to the container so that the last solidified layer of the object can be arranged in a position adjacent to the aforesaid reference surface.

In this way, after each layer is solidified, the modelling base is moved so as to arrange the solidified layer again adjacent to the reference surface, whereupon the process can be repeated for the subsequent layer.

Typically, the three-dimensional object is fixed by means of anchoring elements to the modelling base, which is removable from the three-dimensional 3D printer, when the three-dimensional object is formed.

Before release the three-dimensional objects obtained from the modelling base, it is appropriate and necessary (especially in the dental sector) to remove the residues of fluid substance, typically the residues of photosensitive resin at the liquid or paste state, i.e. the non-solidified (non-polymerised) photosensitive resin.

To remove such residues, substantially two methodologies are known.

In the first methodology, a jet of compressed air is used, which however has the drawback that the surface of the three-dimensional object can be damaged.

In the second methodology, a bath of the three-dimensional object in an adequate solvent is used, typically in a tank filled with solvent. Such a methodology has the drawbacks of a significant consumption of solvent and of the need to wait a pre-set bathing time, which, however, does not always assure the desired complete removal of the residues.

WO 2004/043680 discloses a programmed material consolidation apparatus, which includes at least one fabrication site and a material consolidation system associated with the at least one fabrication site. The at least one fabrication site may be configured to receive one or more fabrication substrates, such as semiconductor substrates. A machine vision system with a translatable or locationally fixed camera may be associated with the at least one fabrication site and the material consolidation system. A cleaning component may also be associated with the at least one fabrication site. The cleaning component may share one or more elements with the at least one fabrication site, or may be separate therefrom. The programmed material consolidation apparatus may also include a substrate handling system, which places fabrication substrates at appropriate locations of the programmed material consolidation apparatus.

US 2016/0059270 shows that a cleaning apparatus is used for a carrier and a model is fixed on the carrier. The cleaning apparatus includes a case body, a sprinkling unit, a switching valve, and a rotating mechanism. The case body has an opening disposed at a top thereof, an outlet disposed at a bottom thereof, and a receiving space disposed between the opening and the outlet. The sprinkling unit is installed in the case body and has plural nozzles configured corresponding to the receiving space. The switching valve is installed at the outlet to open or close the outlet. The rotating mechanism is configured corresponding to the opening and connected to the carrier and is able to drive the carrier in which the model passes through the opening and is disposed in the receiving space. Thus, the safety, stability, and convenience of the model clean-up are improved.

The problem at the basis of the present invention is to provide a container and a method for removing resin residues from a model obtained by three-dimensional 3D printing that overcomes the drawbacks described above, assuring better quality of removal and short removal times.

The present invention therefore, in a first aspect thereof, relates to container for removing resin residues from a model created by three-dimensional 3D printing according to claim 1 and to a method for removing resin residues from a model created by three-dimensional 3D printing according to claim 4.

The model thus created is covered with resin that is still in the liquid or paste state, which has not been polymerised and which needs to be removed. The more the model comprises holes, recesses or otherwise has a relatively complex geometry, the more resin residues there will be.

The model, preferably together with the same base to which it is fixed, is inserted into a container. This container can be a separate element, or be a part of an apparatus.

Into the container is inserted an appropriate solvent, which depends on the type of resin that was polymerised. The solvent is selected because of its ability to remove the resin from the model.

The container is then moved by means of a plurality of linear movements. The movements can be imparted by hand, i.e. by a user who agitates the container manually, or it can be effected automatically by means of an apparatus, in particular when the container is a part of a more complex apparatus. Since the movements can also be performed by hand, a "linear movement" is to be understood as a movement whose linearity is the one obtainable with the precision available to a movement effected not only by a machine but also by a human operator. Therefore, the movement can involuntarily slightly deviate from perfect linearity, i.e. it might be slightly "curved". Therefore with "linear" we mean in the present context a "as linear as possible" movement given the actuator of the movement, be it a human operator or a machine. Deviations from the linearity are therefore possibly present, but are preferably lower than the main direction of the movement in its entirety.

The choice between automatic or manual actuation depends, among other things, on the dimensions and on the weight of the model from which the remaining resin is to be removed.

The actuation includes a plurality of linear movements, i.e. movements along an axis. Not all the linear movements have to be along the same axis.

Preferably, the movement takes place along an axis included within an angle delimited by a vertical axis (Z axis in a system of coordinated axes) and an axis arranged at 45 ° with respect to the vertical axis. Preferably, for optimal cleaning, all linear movements are performed along a single axis positioned in the angle within the range from 0° to 45° (where 0° is the vertical axis), or along a plurality of axes always within the same angle.

Substantially, container undergoes "shaking", enabling the solvent, which is introduced into the container and which by gravity resides on the bottom thereof, to wet the model and to slide thereon with a certain force due to the linear actuation.

The Applicant has found that this actuation and consequent bath of solvent in "jets" allows for optimal removal of the resin residues from the model.

The direction of movement along an axis within the preferred angle also exploits gravity for cleaning the model.

Advantageously, thanks to the provision of the container to be moved with repeated linear movements, an extensive removal of the resin residues from the model is obtained in a short time.

Moreover, the model is not damaged superficially, being subject to simple rinsing during the repeated linear moves of the container.

Furthermore, the solvent introduced into the container is markedly less than is provided in the prior art of bathing the three-dimensional object in the tank filled with solvent.

The preferred features of the method for removing resin residues from a model created by three-dimensional 3D printing according to the present invention are defined in the appended dependent claims.

Preferably, the step of introducing a solvent into the container includes introducing a solvent for not more than one third of an internal volume of the container. More preferably, the solvent fills between one fifth and one third of the internal volume of the container. The Applicant has found that this reduced quantity of solvent is sufficient to make possible an optimal removal of the resin residues from the model.

Preferably, said solvent includes alcohol.

Advantageously, it is a harmless, low-cost solvent.

Preferably, the step of creating a three-dimensional model through three-dimensional 3D printing includes creating a three-dimensional model by stereolithography, more preferably laser scanning stereolithography.

More preferably, the step of creating a three-dimensional model includes creating a three-dimensional model of a tooth or part thereof.

Advantageously, the stereolithography - and in particular the laser scanning stereolithography - is by now a well-known technology and it is particularly well suited to the dental sector.

Preferably, the method according to the invention includes the step of sealing said container before moving it.

Advantageously, in this way the solvent remains in the container even during the repeated linear movements thereof.

Preferably, said linear movements are carried out along one or more axes.

Preferably, the linear movements have an amplitude comprised between 0.5 and 1.5 times a height of the container.

More preferably, said repeated linear movements have an amplitude of at least 30 cm. For example, the amplitude is approximately 40 cm.

The amplitude is the distance between the end points of the linear movement, where the container stops before reversing its direction of movement.

More preferably, said repeated linear movements have a duration of between 30 seconds and 120 seconds.

Yet more preferably, said repeated linear movements have a frequency of at least 20 movements per minute. For example, the frequency is between 60 and 180 movements per minute, which in the case of reciprocating (forwards and backwards) linear movements corresponds to approximately to from 30 to 90 reciprocating movements (forwards and backwards) per minute.

Advantageously, the linear movements are simple to learn for the user who carries them out manually or are easily accomplished by means of an automatic actuation apparatus.

Linear movements within these frequency ranges allow a thorough cleaning while safeguarding the integrity of the model, in particular avoiding damage to its shape, or minimizing the risk of deformation, swelling or breakage. More in detail, linear movements as described reduce the risk of model breakages while maintaining speed and acceleration within certain parameters. Further, also the contact time between the model and solvent is preferably selected as described above (the contact time depends on the duration and frequency of the linear movements) since the deformations and the swelling of the models are related to the contact time between solvent and model. In any case, breakages, swellings and deformations are connected to each other because longer contact times imply more fragile models and their movements through "shacking" become more dangerous.

Preferably, the method according to the invention includes the step of making the model integral with the container before moving it.

Advantageously, the model is not damaged against inner walls of the container during the repeated linear movements imparted thereto.

The container in accordance with the invention is used to implement the method of the invention, and therefore it makes it possible to achieve all the advantages mentioned above.

The preferred features of the container for removing resin residues from a model created by three-dimensional 3D printing according to the present invention, which can be provided individually or in combination with each other are described below.

Preferably, the anchoring elements are directed towards the inside of the tank when the cover is fixed to the tank.

Advantageously, the model fixed to the anchoring elements is thus directed towards the inside of the tank.

Preferably, the cover includes an adapter adapted to sealingly receive the base of the three-dimensional 3D printer.

Advantageously, the adapter makes possible a rapid engagement/disengagement of the base of the three-dimensional 3D printer, bearing the model from which the resin residues are to be removed.

As recited in claim 1, the container of the present invention includes at least two handles, at least one of the handles comprising a duct having an inlet or an outlet outside of said tank and an outlet or an inlet inside of said tank, respectively for introducing or removing the solvent into or from the tank.

Advantageously, the handles allow a secure grip of the container, especially during the repeated linear movements imparted thereto. The duct is preferably and advantageously integrated in one of the handles

Further features and advantages of the invention will be more evident from the description of preferred embodiments thereof, made with reference to the accompanying drawings where:
- figure 1 is a lateral elevation view of a first embodiment of a container for removing resin residues from a model created by three-dimensional 3D printing, not covered by the appended claims but useful to understand the present invention;
- figure 2 is a top plan view of the container of figure 1;
- figure 3 is an exploded perspective view of the container of figure 1;
- figure 4 is a lateral elevation view of an embodiment of a container for removing resin residues from a model created by three-dimensional 3D printing according to the present invention;
- figure 5 is a top plan view of the container of figure 4;
- figure 6 is an exploded perspective view of the container of figure 4.

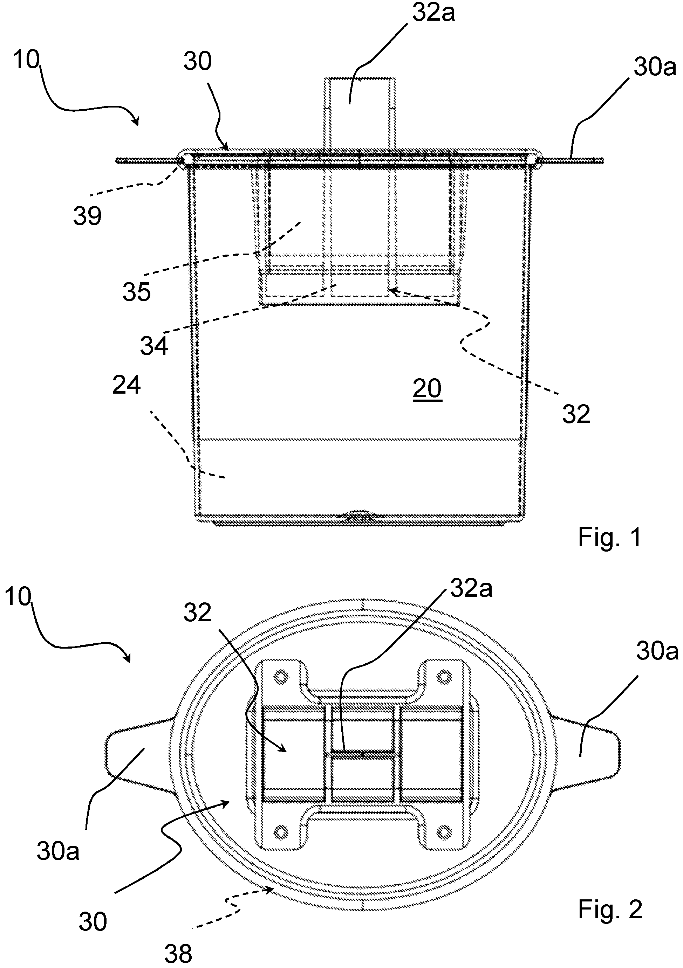

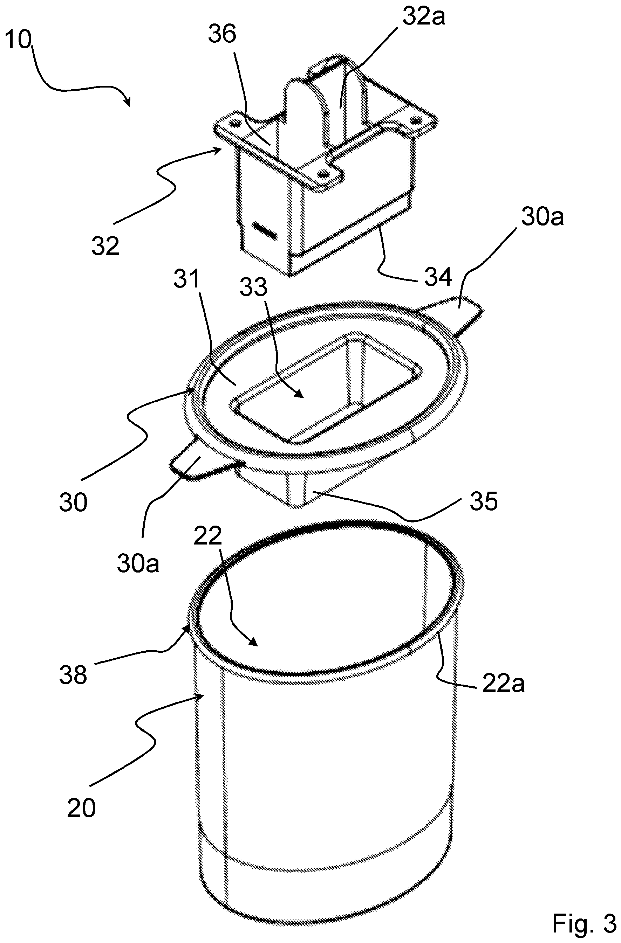

With initial reference to figures 1-3, the numeral 10 indicates in its entirety a first embodiment of a container for removing resin residues from a model (not shown) created by three-dimensional 3D printing, not covered by the appended claims but useful to understand the present invention.

The container 10 includes a tank 20 and a cover 30, adapted to close an upper opening 22 of the tank 20.

The cover 30 includes a base 32 of three-dimensional 3D printer (not shown). Preferably the base 32 is a base of a stereolithographic machine, more preferably of the laser scanning type.

The base 32 bears the model formed in the three-dimensional 3D printer, which is anchored to the base 32 by means of an anchoring element 34.

The anchoring element 34 is extended from a substantially planar portion 36 of the base 32. In particular, the anchoring element 32 is directed towards the inside of the tank 20 when the cover 30 is fixed to the base 20 (figure 1). The anchoring element 34 has substantially cylindrical shape with substantially quadrilateral section, for example rectangular.

The tank 20 has substantially cylindrical shape with substantially elliptical base. Into the tank 20 is poured a solvent 24, for example alcohol, in particular ethyl alcohol.

Between cover 30 and tank 20 are provided sealing means 38, for example an annular gasket 39 positioned at an edge 22a of the upper opening 22 of the tank 20.

The cover 30 includes a substantially planar portion 31 on which is formed a through opening 33.

The cover 30 includes an adapter 35, adapted to sealingly receive the base 32.

The adapter 35 is extended from the substantially planar portion 31, at the through opening 33. In particular, the adapter 35 is directed towards the inside of the tank 20 when the cover 30 is fixed to the tank 20 (figure 1). The adapter 35 has substantially cylindrical shape and substantially quadrilateral section (for example rectangular) coupled to that of the anchoring element 34. The anchoring element 34 is insertable into the adapter 35 (figure 1).

A shape coupling is thus provided between anchoring element 34 and adapter 35.

To further facilitate the insertion and extraction of the anchoring element 34, the walls of the anchoring element 34 and of the adapter 35 can be slightly inclined, tapering in the direction towards the inside of the tank 20, when the cover 30 is fixed to the tank 20.

The cover 30 and the base 32 comprise respective grip appendages 30a and 32a.

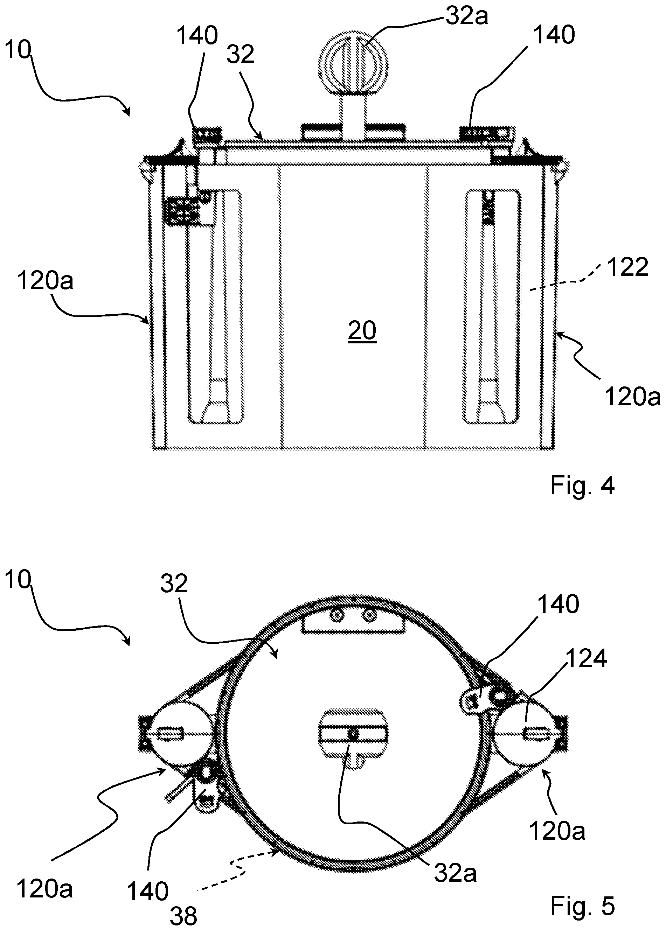

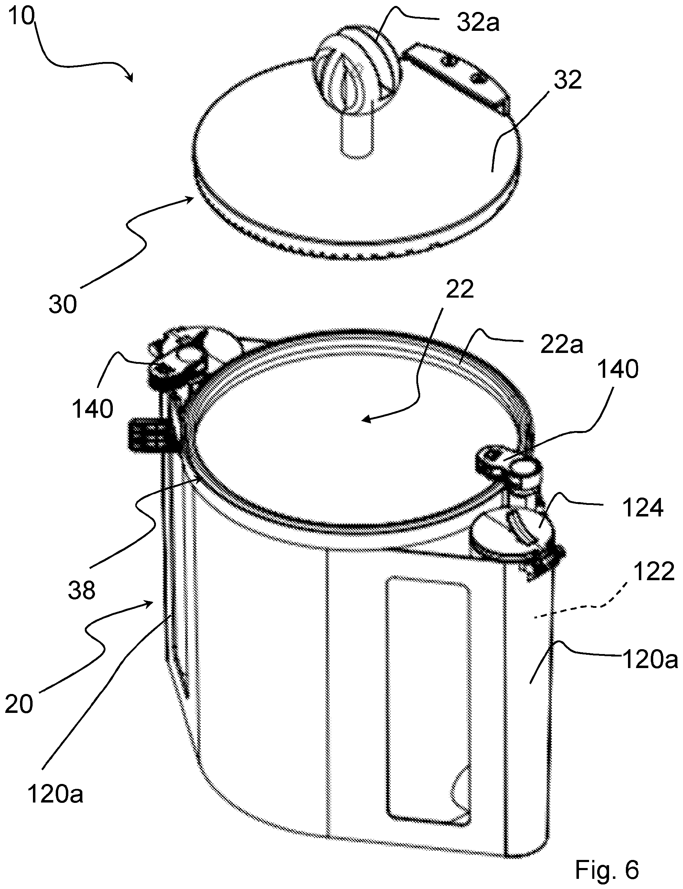

An embodiment of the invention is shown in figures 4-6, in which elements that are structurally or functionally equivalent to those already described with reference to the first embodiment shown in figures 1-3 are indicated with the same reference numeral.

In this embodiment the cover 30 of the container 10 is substantially the base 32 of the three-dimensional 3D printer (not shown). Hence, the presence of an adapter 35 is not necessary.

The tank 20 has substantially cylindrical shape with substantially circular base.

Between base 32 and tank 20 are provided the sealing means 38. A pair of mutually opposite rotatable levers 140, mounted in proximity to the edge 22a of the upper opening 22 of the tank 20, locks/unlocks the base 32 to/from the tank.

The cover 30 comprises a grip appendage 30a.

The tank 20 includes two mutually opposite handles 120a, extending longitudinally with respect to the tank 20.

One of the handles 120a comprises a duct 122 having an inlet, closed by a removable plug 124, outside the tank 20 and an outlet or an inlet inside said tank 20, for introducing or removing the solvent 24 into or from the tank 20.

In operation, a method is implemented for removing resin residues from a model created by three-dimensional 3D printing, for example by stereolithography, in particular laser scanning stereolithography. The three-dimensional model can be a tooth or part thereof.

At first a three-dimensional model is created by three-dimensional 3D printing, then the base 32 of the three-dimensional 3D printer, bearing the model from which the resin residues are to be removed, is extracted.

The base 32 is associated to the cover 30 of the container 10 (as shown in figures 1-3) or itself constitutes the cover 30 of the container 10 (embodiment shown in figures 4-6).

By means of the base 32, the model is inserted into a container 10. The base 32 is made integral to the tank 20 of the container 10, for which the model, too, is made integral with the container 10.

It is observed that in the case of the embodiment shown in figures 4-6, the tank 20 is preferably engaged to the base 32 when it is still in the three-dimensional 3D printer, so as to prevent the resin from dripping from the model to the exterior of the three-dimensional 3D printer and in the workplace.

The cover 30 and the tank 20 are sealed to each other by means of the sealing means 38.

Into the container 10 is introduced the solvent 24. Preferably, the solvent 24 does not fill more than one third of the internal volume of the container 10. More preferably, the solvent 24 does not fill more than one fifth of the internal volume of the container 10. Still more preferably, the solvent 24 fills approximately one tenth of the internal volume of the container 10. For example, a quantity of solvent 24 of between approximately 200 ml and approximately 300 ml can be used.

Then, the container 10 containing the solvent 24 and the model is moved by means of repeated linear movements.

Such linear movements are carried out along one or more axes. The actuation can be effected by hand, i.e. by a user who agitates the container 10 manually, or it can be effected automatically by means of an apparatus, in particular when the container 10 is a part of a more complex apparatus.

Preferably, the repeated linear movements have:
- an amplitude of at least 30 cm (for example, the amplitude is equal to approximately 40 cm);
- a duration of at least 3 minutes (for example, the duration is approximately 4 minutes);
- a frequency of at least 20 movements per minute (for example, the frequency is approximately 30 movements per minute).

The elements comprising the container 10, i.e. the tank 20 and the cover 30 are reusable and the base 32 is reusable as well.

The scope of the invention is defined by the appended claims.

## Claims

1. Container (10) for removing resin residues from a model created through three-dimensional 3D printing and adapted to be moved by means of repeated linear movements, the container (10) including:
- a tank (20) adapted to contain a solvent (24);
- a cover (30) adapted to close the tank (20), the cover (30) including or being a base (32) of three-dimensional 3D printer, the base (32) including one or more anchoring elements (34) for a three-dimensional model;
- means (38) for sealing the cover (30) to the tank (20); **characterized in that** the container further includes:
- at least two handles (120a), at least one of the handles (120a) comprising a duct (122) having an inlet or an outlet outside of said tank (20) and an outlet or an inlet inside of said tank (20), for introducing a solvent (24) or removing it from the tank (20) respectively.

2. Container (10) according to claim 1, wherein the anchoring elements (34) are directed towards the inside of the tank (20) when the cover (30) is fixed to the tank (20).

3. Container (10) according to claim 1 or 2, wherein the cover (30) includes an adapter (35) adapted to sealingly receive the base (32) of three-dimensional 3D printer.

4. Method for removing resin residues from a model created by three- dimensional 3D printing, the method including:
- creating a three-dimensional model through three-dimensional 3D printing;
- inserting the model into the container of any of claims 1 to 3;
- introducing a solvent (24) into the container (10);
- moving the container (10) with the solvent (24) and the model by means of repeated linear movements.

5. Method according to claim 4, wherein introducing a solvent (24)
into the container (10) includes introducing a solvent (24) for not more than one third of an internal volume of the container (10).

6. Method according to claim 4 or 5, wherein said solvent (24) includes alcohol.

7. Method according to one or more of the preceding claims 4 to 6, wherein creating a three-dimensional model through three-dimensional 3D printing includes creating a three-dimensional model by stereolithography, preferably laser scanning stereolithography.

8. Method according to one or more of the preceding claims 4 to 7, wherein creating a three-dimensional model includes creating a three-dimensional model of a tooth or part thereof.

9. Method according to one or more of the preceding claims 4 to 8, including sealing said container (10) before moving the same.

10. Method according to one or more of the preceding claims 4 to 9, wherein said linear movements are carried out along one or more axes.

11. Method according to claim 10, wherein said axis is included within an angle defined between a vertical axis and an axis arranged at 45 ° from the vertical axis.

12. Method according to one or more of the preceding claims 4 to 11, wherein said repeated linear movements have an amplitude comprised between 0.5 and 1.5 times an height of the container.

13. Method according to one or more of the preceding claims 4 to 12, wherein said repeated linear movements have a duration of between 30 seconds and 120 seconds.

14. Method according to one or more of the preceding claims 4 to 13, wherein said repeated linear movements have a frequency of between 60 and 180 movements per minute.

15. Method according to one or more of the preceding claims 4 to 14, including making the model integral with the container (10) before moving the same.

## Patentansprüche

1. Behälter (10) zur Entfernung von Harzrückständen aus einem durch dreidimensionales 3D-Drucken erzeugten Modell, und der dafür ausgelegt ist, mittels wiederholter Linearbewegungen bewegt zu werden, wobei der Behälter (10) Folgendes umfasst:
- einen Tank (20), der dafür ausgelegt ist, ein Lösungsmittel (24) zu fassen;
- eine Abdeckung (30), die dafür ausgelegt ist, den Tank (20) zu verschließen, wobei die Abdeckung (30) eine Basis (32) eines dreidimensionalen 3D-Druckers umfasst oder ist, wobei die Basis (32) ein oder mehrere Verankerungselemente (34) für ein dreidimensionales Modell umfasst;
- Mittel (38) zum Abdichten der Abdeckung (30) an dem Tank (20); **dadurch gekennzeichnet, dass** der Behälter ferner Folgendes umfasst:
- mindestens zwei Griffe (120a), wobei mindestens einer der Griffe (120a) einen Kanal (122) umfasst, der einen Einlass oder einen Auslass am Äußeren des Tanks (20) und einen Auslass oder einen Einlass im Inneren des Tanks (20) zur jeweiligen Einleitung eines Lösungsmittels (24) oder dessen Entfernung aus dem Tank (20) umfasst.

2. Behälter (10) nach Anspruch 1, wobei die Verankerungselemente (34) in das Innere des Tanks (20) gerichtet sind, wenn die Abdeckung (30) an dem Tank (20) befestigt ist.

3. Behälter (10) nach Anspruch 1 oder 2, wobei die Abdeckung (30) einen Adapter (35) umfasst, der dafür ausgelegt ist, die Basis (32) des dreidimensionalen 3D-Druckers abdichtend aufzunehmen.

4. Verfahren zur Entfernung von Harzrückständen aus einem durch dreidimensionales 3D-Drucken erzeugten Modell, wobei das Verfahren Folgendes umfasst:
- Erzeugen eines dreidimensionalen Modells durch dreidimensionales 3D-Drucken;
- Einbringen des Modells in den Behälter nach einem beliebigen der Ansprüche 1 bis 3;
- Einbringen eines Lösungsmittels (24) in den Behälter (10);
- Bewegen des Behälters (10) mit dem Lösungsmittel (24) und dem Modell mittels wiederholter Linearbewegungen.

5. Verfahren nach Anspruch 4, wobei das Einbringen eines Lösungsmittels (24) in den Behälter (10) ein Einbringen eines Lösungsmittels (24) für nicht mehr als ein Drittel eines Innenvolumens des Behälters (10) umfasst.

6. Verfahren nach Anspruch 4 oder 5, wobei das Lösungsmittel (24) Alkohol umfasst.

7. Verfahren nach einem oder mehreren der vorhergehenden Ansprüche 4 bis 6, wobei das Erzeugen eines dreidimensionalen Modells durch dreidimensionales 3D-Drucken ein Erzeugen eines dreidimensionalen Modells durch Stereolithographie, vorzugsweise Laser-Scanning-Stereolithographie, umfasst.

8. Verfahren nach einem oder mehreren der vorhergehenden Ansprüche 4 bis 7, wobei das Erzeugen eines dreidimensionalen Modells ein Erzeugen eines dreidimensionalen Modells eines Zahns oder eines Teils davon umfasst.

9. Verfahren nach einem oder mehreren der vorhergehenden Ansprüche 4 bis 8, das ein Abdichten des Behälters (10), bevor dieser bewegt wird, umfasst.

10. Verfahren nach einem oder mehreren der vorhergehenden Ansprüche 4 bis 9, wobei die Linearbewegungen entlang einer oder mehrerer Achsen ausgeführt werden.

11. Verfahren nach Anspruch 10, wobei die Achse innerhalb eines Winkels umfasst ist, der zwischen einer vertikalen Achse und einer Achse, die 45° zu der vertikalen Achse angeordnet ist, definiert ist.

12. Verfahren nach einem oder mehreren der vorhergehenden Ansprüche 4 bis 11, wobei die wiederholten Linearbewegungen eine Amplitude aufweisen, die zwischen dem 0,5- und 1,5-Fachen einer Höhe des Behälters umfasst ist.

13. Verfahren nach einem oder mehreren der vorhergehenden Ansprüche 4 bis 12, wobei die wiederholten Linearbewegungen eine Dauer zwischen 30 Sekunden und 120 Sekunden aufweisen.

14. Verfahren nach einem oder mehreren der vorhergehenden Ansprüche 4 bis 13, wobei die wiederholten Linearbewegungen eine Frequenz zwischen 60 und 180 Bewegungen pro Minute aufweisen.

15. Verfahren nach einem oder mehreren der vorhergehenden Ansprüche 4 bis 14, das ein einstückiges Verbinden des Modells mit dem Behälter (10), bevor dieser bewegt wird, umfasst.

## Revendications

1. Récipient (10) pour éliminer les résidus de résine d'un modèle créé par impression 3D tridimensionnelle et adapté pour être déplacé au moyen de mouvements linéaires répétés, le récipient (10) comprenant :
- un réservoir (20) adapté pour contenir un solvant (24) ;
- un couvercle (30) adapté pour fermer le réservoir (20), le couvercle (30) comprenant ou étant une base (32) d'imprimante 3D tridimensionnelle, la base (32) comprenant un ou plusieurs éléments d'ancrage (34) pour un modèle tridimensionnel ;
- des moyens (38) pour sceller le couvercle (30) au réservoir (20) ;
**caractérisé en ce que** le récipient comprend en outre :
- au moins deux poignées (120a), au moins une des poignées (120a) comprenant un conduit (122) ayant une entrée ou une sortie à l'extérieur dudit réservoir (20) et une sortie ou une entrée à l'intérieur dudit réservoir (20), pour introduire un solvant (24) ou le retirer du réservoir (20) respectivement.

2. Récipient (10) selon la revendication 1, dans lequel les éléments d'ancrage (34) sont dirigés vers l'intérieur du réservoir (20) lorsque le couvercle (30) est fixé au réservoir (20).

3. Récipient (10) selon la revendication 1 ou 2, dans lequel le couvercle (30) comprend un adaptateur (35) adapté pour recevoir de manière étanche la base (32) d'une imprimante 3D tridimensionnelle.

4. Procédé d'élimination de résidus de résine d'un modèle créé par impression 3D tridimensionnelle, le procédé comprenant les étapes consistant à :
- créer un modèle tridimensionnel par impression 3D tridimensionnelle ;
- insérer le modèle dans le récipient selon l'une quelconque des revendications 1 à 3 ;
- introduire un solvant (24) dans le récipient (10) ;
- déplacer le récipient (10) avec le solvant (24) et le modèle au moyen de mouvements linéaires répétés.

5. Procédé selon la revendication 4, dans lequel l'introduction d'un solvant (24) dans le récipient (10) comprend l'introduction d'un solvant (24) sur un maximum d'un tiers du volume interne du récipient (10).

6. Procédé selon la revendication 4 ou 5, dans lequel ledit solvant (24) comprend de l'alcool.

7. Procédé selon une ou plusieurs des revendications précédentes 4 à 6, dans lequel la création d'un modèle tridimensionnel par impression 3D tridimensionnelle comprend la création d'un modèle tridimensionnel par stéréolithographie, de préférence par stéréolithographie à balayage laser.

8. Procédé selon une ou plusieurs des revendications précédentes 4 à 7, dans lequel la création d'un modèle tridimensionnel comprend la création d'un modèle tridimensionnel d'une dent ou d'une partie de celle-ci.

9. Procédé selon une ou plusieurs des revendications précédentes 4 à 8, comprenant la fermeture hermétique dudit récipient (10) avant son déplacement.

10. Procédé selon une ou plusieurs des revendications précédentes 4 à 9, dans lequel lesdits mouvements linéaires sont effectués selon un ou plusieurs axes.

11. Procédé selon la revendication 10, dans lequel ledit axe est compris dans un angle défini entre un axe vertical et un axe disposé à 45° de l'axe vertical.

12. Procédé selon une ou plusieurs des revendications précédentes 4 à 11, dans lequel lesdits mouvements linéaires répétés ont une amplitude comprise entre 0,5 et 1,5 fois une hauteur du récipient.

13. Procédé selon une ou plusieurs des revendications précédentes 4 à 12, dans lequel lesdits mouvements linéaires répétés ont une durée comprise entre 30 secondes et 120 secondes.

14. Procédé selon une ou plusieurs des revendications précédentes 4 à 13, dans lequel lesdits mouvements linéaires répétés ont une fréquence comprise entre 60 et 180 mouvements par minute.

15. Procédé selon une ou plusieurs des revendications précédentes 4 à 14, comprenant la solidarisation du modèle au récipient (10) avant le déplacement de celui-ci.
